# EUROPEAN PATENT SPECIFICATION

(11) **EP 3 963 655 B1**
(45) Date of publication and mention of the grant of the patent: **07.06.2023**
(21) Application number: 20728234.4
(22) Date of filing: 30.04.2020
(51) Int. Cl.: H01M 8/22, B01D 61/00, C02F 1/00, C02F 1/469

(54) **CAPACITIVE ELECTRODE, MEMBRANE STACK COMPRISING ELECTRODE AND METHOD FOR MANUFACTURING SUCH ELECTRODE**
KAPAZITIVE ELEKTRODE, MEMBRANSTAPEL EINE ELEKTRODE UMFASSEND, SOWIE VERFAHREN ZUR HERSTELLUNG EINER DERARTIGEN ELEKTRODE
L'ÉLECTRODE CAPACITIVE, LA MEULE MEMBRANEUSE COMPRENANT L'ÉLECTRODE ET LA MÉTHODE POUR FABRIQUER UNE TELLE ÉLECTRODE

(30) Priority: 30.04.2019 NL 2023035
(43) Date of publication of application: 09.03.2022
(73) Proprietor: Redstack B.V., 8606 BT Sneek (NL)
(72) Inventor: VEERMAN, Joost, 8606 BT SNEEK (NL); KUNTENG, Damnearn, 8606 BT SNEEK (NL); GOETING, Christiaan Haldir, 8606 BT SNEEK (NL)
(74) Representative: Arnold & Siedsma
(86) International application number: PCT/NL2020/050274
(87) International publication number: WO 2020/222645

(56) References cited:
- CN-A- 104 445 534
- US-A1- 2006 074 284
- US-A1- 2014 346 046

## Description

The invention relates to a capacitive electrode, a membrane stack comprising such electrode and a method for manufacturing such a capacitive electrode.

Electro-membrane processes, such as (reverse) electrodialysis, are known from practice. Such processes mostly involve redox reactions at the electrodes, which convert ion flux into electrical current and vice versa. A disadvantage of such redox-based processes is that it often requires the use of expensive and/or rare materials for the electrodes, such as platinum. The use of such electrodes increases the cost of the electro-membrane device. Another disadvantage of such electrodes for redox-based electro-membrane processes is that the redox processes lead to the formation of hazardous and/or explosive gases, such as chlorine and hydrogen, at the electrodes.

In order to obviate these disadvantages, it is known that capacitive electrodes may be used. Such capacitive electrodes comprise a current feeder on which a capacitive layer is provided. The capacitive layer is provided to the current feeder using a binder, which in some cases is toxic, and/or applying high pressure to the capacitive layer to establish a bond between the current feeder and the capacitive layer. The capacitive electrode is configured to, during use, store ions and conduct electrons. The capacity of the electrode to do so is mostly determined by the thickness of the capacitive layer that is provided on the current feeder.

A disadvantage of the known capacitive electrodes is that the thickness of the capacitive layer, and thus the capacity of the electrode, is limited due to the fact that delamination of the capacitive layer from the current feeder occurs at increasing thicknesses of the capacitive layer. As a result, the thickness of the layer in practice is limited to 1 - 2.5 mm thickness.

The invention is aimed at obviating or at least reducing the abovementioned problems. More particularly, the invention aims to provide an electrode having an increased capacity.

To that end, the invention comprises a capacitive electrode, the capacitive electrode comprising:
- an electrode housing comprising:
   ∼ a number of housing walls that enclose a housing space; and
   ∼ an opening that is operatively connected to the housing space, and wherein the opening is configured to be positioned adjacent an end membrane of a membrane stack;
- a capacitive layer that is positioned in the housing space;
- a current feeder that is positioned in the housing space and that is in electrical contact with the capacitive layer;
- a gel layer that is positioned in contact with the capacitive layer and that is provided in or adjacent to the opening such that the gel layer seals the opening.

An advantage of the capacitive electrode according to the invention is that the layer thickness can be increased compared to known capacitive electrodes, which leads to an increase in capacity. The increase of the capacitive layer is possible due to the fact that the capacitive layer, during use of the electrode, is a flexible, moist layer that is kept enclosed in the housing by the gel layer. In other words, by providing a flexible, moist capacitive layer that is enclosed in the housing with a gel layer, the problem of delamination is obviated. This allows the thickness of the capacitive layer to be increased above the thicknesses currently possible in the known electrodes.

Moreover, the capacitive electrode according to the invention has the surprising other advantage that it provides a substantially linear relation between electrode thickness and electrode capacity. This for example means that an increase of thickness of the capacitive layer with a factor two results in an increase of the capacity with about a factor two. This is, amongst others, due to the fact that the presence of a binder is obviated in the capacitive layer according to the invention.

A capacitive electrode requires an electrical connection to allow it to function properly, yet does not necessarily require the capacitive material to be integrally formed with the current feeder, such as is the case with a binder and/or with highly compressed particles of capacitive material. Another advantage of the capacitive electrode according to the invention is that it does not contain any binder and/or closely pressed particles of capacitive material, because the capacitive layer is contained by the gel of the gel layer. This reduces manufacturing cost, increases conductivity and, in case of a binder, obviates the use of toxic and/or expensive binders such as for example PVDF or PTFE.

Another advantage of the capacitive electrode according to the invention is that the capacitive layer and/or the gel layer can be easily exchanged for a new layer. This is due to the fact that both layers are not integrally formed with the current feeder.

Yet another advantage of the capacitive electrode according to the invention is that the gel layer obviates the use of an additional ion-selective membrane that is positioned between the electrode and the membrane stack. This obviates the use of a (specific) end membrane and/or allows the use of (other) intermediates, such as a flow compartment, and/or a gasket or a spacer of a flow compartment.

Yet another advantage of the capacitive electrode according to the invention is that the effective surface area of the electrode is increased due to the lack of binder and the decreased interparticle space in the capacitive material layer. This also decreases electrical resistance and facilitates increased salt/ion transport. Differently said, clogging of the openings of the capacitive particles (as present with binders) is obviated, and the particles can settle closer to each other due to the absence of binder in between them, thus facilitating better salt/ion transport and decreases electrical resistance.

In this respect it is noted that electrodes according to the prior art often use (inert polymeric) binder, such as PVDF or PTFE, to keep and/or bind the capacitive particles together and to bond the capacitive layer to the current feeder (surface). Such binders, usually having 5-10 wt% of the capacitive layer, are known to block a significant amount of pores within the capacitive layer. The use of a binder thus increases resistance and limits capacity of the electrodes. In addition, such binders are expensive and/or require toxic solvents (such as NMP). Therefore, the electrodes according to the invention have significant advantages with respect to capacity compared to prior art electrodes.

In an embodiment according to the invention, the current feeder is provided with at least one connector that extends at least partially outside the electrode housing.

An advantage of providing a connector that at least partially extends outside the housing is that the current feeder is easily connectable to an external source. The connector may be provided as a separate connector that is connected to the current feeder after it is manufactured, such as by means of welding, clicking or any suitable connection. The current feeder and the connector may also be integrally formed. This for example may take the form of a mesh current feeder or a (perforated) foil-shaped current feeder, for example a (perforated) graphite foil or an expanded flexible graphite foil, which is near one or more sides thereof cut to form a connector that at least partially extends beyond the housing.

In another example, the current feeder may comprise a mesh and the connector is formed by a wire or ring that is at least partially embedded in a portion of the housing, for example in a side wall, or preferably, near the opening of the housing. Such a wire or ring may be extending along the circumference of the opening and be connected to the current feeder. This may for example be performed by folding the current feeder, especially a mesh type current feeder, against or over the ring or wire.

In an embodiment according to the invention, the gel layer is provided adjacent with the end membrane of the membrane stack.

An advantage of providing the gel layer and the end membrane adjacent, preferably contiguous, with each other is that a good sealing of the housing space is achieved.

In an embodiment according to the invention, the capacitive electrode comprises a separator layer, preferably a filter paper layer, that is positioned between the gel layer and the capacitive layer.

An advantage of this embodiment is that the capacitive layer can have increased moisture level when the gel layer is applied without mixing between capacitive layer and gel layer. The filter paper layer may be manufactured of any suitable material including (thermoplastic) polymers such as polypropylene, cellulose or paper. It also provides the advantage that the capacitive layer, during manufacturing, does not need to be dried or needs less drying.

In an embodiment according to the invention, the gel layer is an ion-conducting layer and/or wherein the gel is chosen from a group of a hydrogel, gelatin, a PVA based gel, a PMMA based gel, agar-agar or a superabsorbent polymer (SAP) that is conditioned in a salt solution.

Gels, and hydrogels in particular, have the advantage that they allow ion and a limited amount of water transport through the gel layer to the capacitive layer, whereas they simultaneously prevent an excess of water to traverse the gel that would lead the capacitive layer to become too wet. This is amongst others due to osmosis which reduces the water transfer to the capacitive layer. Another advantage of gels is that such layers also function as a cation and/or anion source or sink or buffer, which increases efficiency of the capacitive electrode.

Yet another advantage of gels is that, due to its flexibility and elasticity, they provide a constant containing force on the capacitive layer, which prevents the particles of the capacitive layer from moving with respect to each other. At the same time, these properties also reduce the risk of mechanical damage and/or penetration by impurities reaching the capacitive layer.

An advantage of a superabsorbent polymer (SAP) that is conditioned in a salt solution is, additionally to the abovementioned advantages, that it even more strongly enhances conductivity. In an embodiment according to the invention, the housing is an end-plate of a membrane-based device, such as an electrodialysis device, a reverse electrodialysis device or a fuel cell.

By providing the housing as an end plate of the membrane-based device, a compact and cost-effective solution is achieved, because a separate end plate is obviated. In addition, the capacitive electrode according to the invention does not require a fluid electrolyte (i.e. an electrode rinse solution) and, therefore, does not require a fluid entry and/or exit opening in the housing for the electrolyte. As a result, the end plate that is formed by the housing has a compact and efficient layout, which increases efficiency and reduces material use and cost.

In an embodiment according to the invention, the capacitive layer is an activated carbon layer. An advantage of an activated carbon layer is that it provides a good capacitance and electrical conductivity and, in contrast to other suitable materials, is highly cost-effective in terms of manufacturing and handling. Furthermore, activated carbon is readily available and not a scarce resource.

In an embodiment according to the invention, the capacitive layer comprises one or more of activated carbon, carbon black and/or graphite.

By providing one or more of the abovementioned substances, especially activated carbon with one or both of carbon black and graphite, the electrical conductivity of the capacitive layer is improved even further.

In an embodiment according to the invention, the capacitive layer comprises beads of capacitive material or capacitive material in the form of powder or a mixture of beads and powder.

An advantage of providing the activated carbon layer in the form of beads and/or powder is that, due to settling of the beads and/or the powder, a porous structure with an extensive network of fine channels and pores and small voids is formed. This enhances ion transport into and inside the capacitive layer. In other words, the accessibility for ions into and inside the capacitive layer is increased.

By providing the capacitive layer as beads, powder or a mixture thereof, an increased density of the material can be achieved, which increases the prospective (i.e. potential) capacity of the layer. This is at least partly due to the abovementioned increased accessibility. It is noted that the accessibility both relates to in-layer accessibility as well as the interlayer accessibility between the capacitive layer and the current feeder. By providing beads only, the capacitive layer has an additional advantage of being easily manufacturable, since it only requires providing the beads and, optionally, compressing the beads to a more dense capacitive layer. Providing the capacitive layer as powder has an advantage in that it provides a very dense layer with a low amount of pores and voids and an even more increased capacity. In a specific embodiment, beads and powder are both used in conjunction with each other, which results in a layer in which the voids between beads are filled with powder. This provides the advantage of an excellent electric conductivity and simultaneously an excellent ion accessibility.

Another advantage of this embodiment is that the handling and/or manufacturability of the capacitive layer is also increased when the layer is formed of beads, powder and/or a combination thereof.

In an embodiment according to the invention, the capacitive layer has a thickness in the range of 0.5 - 50 mm, and preferably has a thickness in the range of 1 - 10 mm.

It is found that a capacitive electrode according to the invention has a capacity that is linearly dependent on the thickness of the capacitive layer. Therefore, an increased thickness is preferable over a smaller thickness. However, the thickness may on the other hand be limited in order to reduce the space occupied by the electrode when placed in a membrane stack assembly. An advantage of providing a thickness in the range of 0.5 - 50 mm is that a good balance is provided between the capacity of the layer and the size of the electrode.

In an embodiment according to the invention, the gel layer has a thickness in the range of 0.5 - 50 mm, and preferably has a thickness in the range of 1 - 10 mm.

The gel layer primarily functions to separate fluid, especially water from the membrane stack, from the capacitive layer. In addition, the gel layer also functions as an at least partially conductive layer for the transport of ions between the capacitive layer and the gel layer. In order to fulfill these functions, the gel layer isolates and/or encapsulates the capacitive layer.

By providing a thickness in the abovementioned range, a good balance is struck between space occupied by the gel layer and the functions performed by the gel layer. In other words, a gel layer in the abovementioned range provides good insulating and conductive properties without taking up an unduly amount of space within the housing. It has been found that the layer with the abovementioned thickness also provides excellent positioning abilities in that it holds the capacitive layer in place against the current feeder.

In an embodiment according to the invention, the gel layer and the capacitive layer have a substantially equal thickness.

In an embodiment according to the invention the current feeder is chosen from a (perforated) carbon foil, a (perforated) carbon plate, a graphite foil, a graphite plate, a platinum coated titanium mesh, a platinum coated titanium (perforated) plate, a platinum coated titanium (perforated) foil or a mesh coated with (mixed) metal oxides, a (perforated) plate coated with (mixed) metal oxides, or a (perforated) foil coated with (mixed) metal oxides.

The abovementioned materials provide a high conductivity against relatively low cost. Another advantage is that, by providing a foil, a mesh or a plate of the abovementioned materials, a large contact surface is obtained between the current feeder and the capacitive layer.

In an embodiment according to the invention, the gel layer comprises a reinforcement layer, wherein the reinforcement layer preferably comprises a netting or a non-woven.

An advantage of a reinforcing layer is that the gel layer is provided with additional stability, which further enhances mechanical stability. It also further enhances dimensional stability in that the dimensions of the gel layer substantially do not vary under varying circumstances, thus maintaining the sealing properties.

In an embodiment according to the invention, the reinforcement layer has a thickness in the range of 0.5 - 50 mm, and preferably has a thickness in the range of 1 - 10 mm.

In an embodiment according to the invention, the housing comprises a lining or rim that extends around the opening and that is in electrical contact with the current feeder, wherein the lining or rim is preferably copper or graphite.

The current feeder may be connectable with an external source by means of a copper lining, copper ring or copper rim that is positioned near the opening of the housing.

An advantage thereof is that the electrical connection with the current feeder is positioned with the outer circumference of the housing and is therewith protected from outside damage.

Another advantage is that, due to the fact that the copper extends around the circumference of the opening, the current feeder is connectable at one or more different locations along the circumference. This increases reliability of the connection and allows the current feeder to operate even if a single connection would be malfunctioning.

In an embodiment, the copper ring, rim or lining could be provided in a groove in the housing that extends around the circumference of the opening.

In an embodiment according to the invention, the electrode additionally comprises a second capacitive layer and a second gel layer, such that, when viewed from the opening towards the housing space, the electrode comprises the gel layer, the capacitive layer, the current feeder, the second capacitive layer and the second gel layer.

An advantage of providing multiple capacitive and gel layers is that the capacity of the capacitive electrode is increased. In addition, by providing multiple capacitive layers (which are each connected to the current feeder) in between which gel layers are provided, a redundant and reliable capacitive electrode is provided. As such, a double layer capacitive electrode is achieved.

In an embodiment according to the invention, the current feeder is integrated in the capacitive layer, wherein the current feeder preferably extends in the capacitive layer in a direction substantially parallel to the opening.

An advantage of this embodiment is that an improved connection between the current feeder and the capacitive layer is achieved, which (further) increases performance of the capacitive electrode. In an embodiment according to the invention, the gel comprises a salt composition, such as NaCl or KCl, wherein the composition is preferably a solution in the range of 0.1M < salt < 6M.

The advantage of applying a salt composition, such as NaCl or KCl, to the gel an increased conductivity of the gel with respect to ions can be achieved. Naturally, other salts may also be used.

In an embodiment according to the invention, the capacitive layer is manufactured from a compressed base material, such as activated carbon, and preferably activated carbon beads, powder or a mixture thereof.

An advantage of compressing the base material of the capacitive layer is that excess water is expelled during manufacturing, while simultaneously providing a high density capacitive layer. It is noted that the compressing is preferably performed during the application, or more specific the formation, of the capacitive layer on the current feeder. In other words, the base material is compressed on the current feeder to form the capacitive layer.

Another advantage is that the compression results in an enhanced capacity due to the settling of the particles (i.e. beads and/or powder) in the capacitive layer.

In an embodiment according to the invention, the housing is provided with at least one drainage channel that is configured for draining off water from the housing.

An advantage of providing at least one drainage channel is that water can be drained off, for example if the moisture level in the gel layer exceeds a predetermined level. As a result, the excess water is prevented from reaching the capacitive layer which obviates oversaturation of the capacitive layer and thus enhances prevention of destabilization and/or degeneration of the capacitive layer. It also obviates the formation of a water layer between the gel layer and the membrane stack, which may increase electrical resistance.

The invention also relates to a membrane-based device for performing a membrane-based process, such as electrodialysis and/or reverse electrodialysis, the device comprising:
- at least one electrode according to any one of the preceding clauses;
- a number membranes that are stacked to form a stack of membranes,
wherein the at least one electrode is positioned adjacent to an end membrane of the membrane stack such that the opening and/or gel layer of the electrode are in contact with the end membrane. It is noted that the contact between (the opening and/or gel layer of) the electrode and the end membrane may also be provided by means of indirect contact via a flow compartment of the membrane stack and/or a gasket of the flow compartment and/or spacer of the flow compartment that is positioned at the end of the membrane stack. It is also possible that the end membrane is a membrane of a flow compartment of the membrane stack.

The membrane-based device for performing a membrane-based process according to the invention provides similar effects and advantages as the capacitive electrode according to the invention.

The membranes of the membrane-based device may be anion exchange membranes (AEM), cation exchange membranes (CEM) and/or bipolar membranes. Preferably, the membrane stack comprises alternatingly AEM and CEM.

It is noted that, when using the capacitive electrode according to the invention, the end membrane of the stack may be directly contiguous with the capacitive electrode and more specifically with the housing and the gel layer within the housing space.

In an embodiment according to the invention, the membrane-based device is an electrodialysis - device or a reverse electrodialysis device.

The invention also relates to a method for manufacturing a capacitive electrode for a membrane-based process, the method comprising the steps of:
- providing an electrode housing comprising:
   ∼ a number of housing walls that enclose a housing space; and
   ∼ an opening that is operatively connected to the housing space, and wherein the opening is configured to be positioned adjacent an end membrane of a membrane stack;
- providing a current feeder to the electrode housing, wherein the current feeder comprises a connector that extends at least partially outside the electrode housing;
- providing a capacitive layer to the electrode housing;
- applying a gel layer near or in the opening, such that the gel layer is in contact with the capacitive layer and seals the opening.

It is noted that the opening may in the method be positioned contiguous with the end membrane or may be contiguous with a spacer and/or gasket that is provided on the end membrane, thus forming an indirect connection between the end membrane and the opening. It may even be that the end membrane is a membrane of a flow compartment of the membrane stack.

The method according to the invention provides similar effects and advantages as the capacitive electrode and/or the membrane-based device for performing a membrane-based process according to the invention.

In an embodiment of the method according to the invention, the connector of the current feeder may be a separate connector, wherein the method additionally may comprise the step of connecting the connector to the current feeder, or the connector of the current feeder may be integrally formed with the current feeder and may thus be an integral part thereof.

In an embodiment of the method according to the invention, the step of providing a capacitive layer to the electrode housing comprises:
- providing a slurry of water and activated carbon;
- applying the slurry on the current feeder such that the slurry and the current feeder are in electrical contact with each other;
- drying the slurry to form a flexible, moist capacitive layer.

The step of drying the slurry can be provided using any suitable means and may for example comprise drying the slurry using heat to evaporate the water or may comprise (com)pressing the slurry (and the current feeder) to expel excess water.

In an embodiment of the method according to the invention, the step of applying the gel layer comprises pouring a liquid gel, which may be a warm liquid gel, on top of the capacitive layer, and wherein the step of applying the gel layer optionally also comprises applying a filter paper layer between the gel and the capacitive layer.

In an alternative method according to the invention, the alternative method for manufacturing a capacitive electrode for a membrane-based process may comprise the steps of:
- providing an electrode housing comprising:
   ∼ a number of housing walls that enclose a housing space; and
   ∼ an opening that is operatively connected to the housing space, and wherein the opening is configured to be positioned adjacent an end of a membrane stack;
- applying a gel layer in the housing near a housing bottom that is positioned opposite the opening,
- providing a capacitive layer to the electrode housing such that the capacitive layer is in contact with the gel layer; and
- providing a current feeder to the electrode housing, wherein the current feeder comprises a connector that extends at least partially outside the electrode housing, and wherein the current feeder is configured to be positioned in or near the opening of the housing.

The alternative method according to the invention provides similar effects and advantages as the capacitive electrode and/or the membrane-based device for performing a membrane-based process according to the invention and/or the method according to the invention. More specifically, the embodiments of the method according to the invention may also freely be combined with the alternative method according to the invention.

Further advantages, features and details of the invention are elucidated on the basis of preferred embodiments thereof, wherein reference is made to the accompanying drawings, in which:
Figures 1A, 1B show a cross sectional view of a first example of a capacitive electrode according to the invention;
Figures 2A, 2B show a cross sectional view of a second example of a capacitive electrode according to the invention;
Figures 3A, 3B show a cross sectional view of a third example of a capacitive electrode according to the invention;
Figures 4A, 4B show a cross sectional view of a fourth example of a capacitive electrode according to the invention;
Figures 5A, 5B show a cross sectional view of a fifth example of a capacitive electrode according to the invention;
Figure 6 and 7 show graphical data concerning experiments with a capacitive electrode according to the invention; and

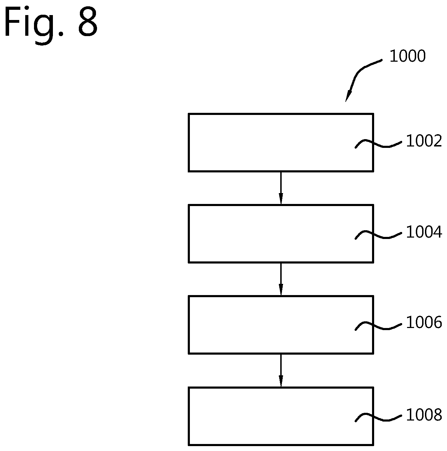

Figure 8 shows an example of a method according to the invention.

In a first example, capacitive electrode 2 comprises housing 4 with housing walls 6, 8 and opening 10 that together delineate housing space 12. In this example, housing 4 is a housing in which housing wall 6 is side wall 6 and housing wall 8 forms bottom wall 8. Housing walls 6, 8 together enclose housing space 12, while opening 10 provides access to housing space 12.

Furthermore, opening 10 is delineated by end section 14 of end wall 6, which end section is configured to be adjacent to end membrane 16 of a membrane stack. In this example, end membrane 16 is a CEM-membrane. Naturally, it may also be a different type of membrane, depending on the configuration of the membrane stack to which the capacitive electrode is connected. Moreover, it may even be a flow compartment of the membrane stack.

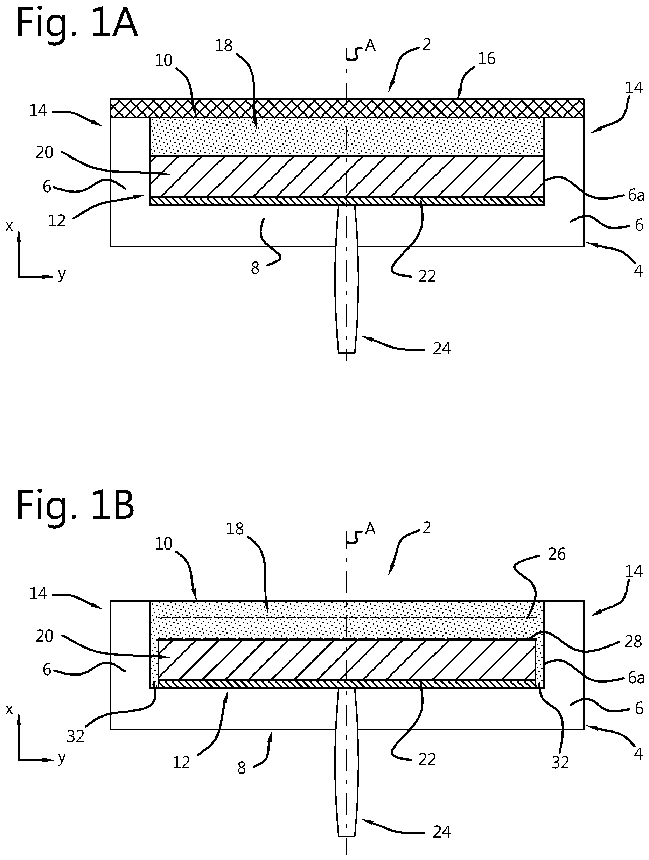

Housing space 12, when viewed in first direction x that is parallel to central axis A, subsequently comprises gel layer 18, capacitive layer 20, which in this example is manufactured from (powdered) activated carbon, and current feeder 22 with connector 24. Gel layer 18 extends in second direction y, which is perpendicular to first direction x, over the entire surface area of housing space 12. As such, gel layer 18 forms a seal between end membrane 16 and capacitive layer 20 in housing space 12 (see figures 1A, 1B). Capacitive layer 20 extends directly adjacent to gel layer 18 in second direction y over the entire surface of housing space 18 (see figure 1A) or a central part of housing space 18 (see figure 1B). In an example (see figure 1B) in which capacitive layer 20 extends over at least a central part of housing space 12, a gel layer 32 is provided between the circumference of capacitive layer 20 and the internal side 6a of housing wall 6. In this case, capacitive layer 20 is encapsulated by gel layer 18, current feeder 22 and the gel layer 32 positioned next to capacitive layer 20. Current feeder 22 is in this example positioned adjacent with and directly in electrical contact with capacitive layer 20 and, on an opposite side, with bottom wall 8 of housing 4. Bottom wall 8 in this example is provided with an opening through which connector 24 extends. Connector 24 is connected to, or integrally formed with, current feeder 22 and forms a connection to connect an external power source or power load/sink to current feeder 22. As such, a direct electrical connection exists between connector 24 and current feeder 22, as well as between current feeder 22, via capacitive layer 20 and gel layer 18. In this example (figure 1B), gel layer 18 is further provided with reinforcement layer 26 that enhances stability and rigidity of gel layer 18. Furthermore, in this example porous separator layer 28, which in this example is filter paper layer 28, is provided between gel layer 18 and capacitive layer 20. It is noted that reinforcement layer 26 and/or separator layer 28 may be obviated, since they are not essential for capacitive electrode 2.

In a second example, capacitive electrode 102 comprises housing 104 with housing walls 106, 108 and opening 110 that together delineate housing space 112. In this example, housing 104 is a housing in which housing wall 106 is side wall 106 and housing wall 108 forms bottom wall 108. Housing walls 106, 108 together enclose housing space 112, while opening 110 provides access to housing space 112.

Furthermore, opening 110 is delineated by end section 114 of end wall 106, which end section is configured to be adjacent to end membrane 116 of a membrane stack. In this example, end membrane 116 is a CEM-membrane. Naturally, it may also be a different type of membrane, depending on the configuration of the membrane stack to which the capacitive electrode is connected. Moreover, it may even be a flow compartment of the membrane stack.

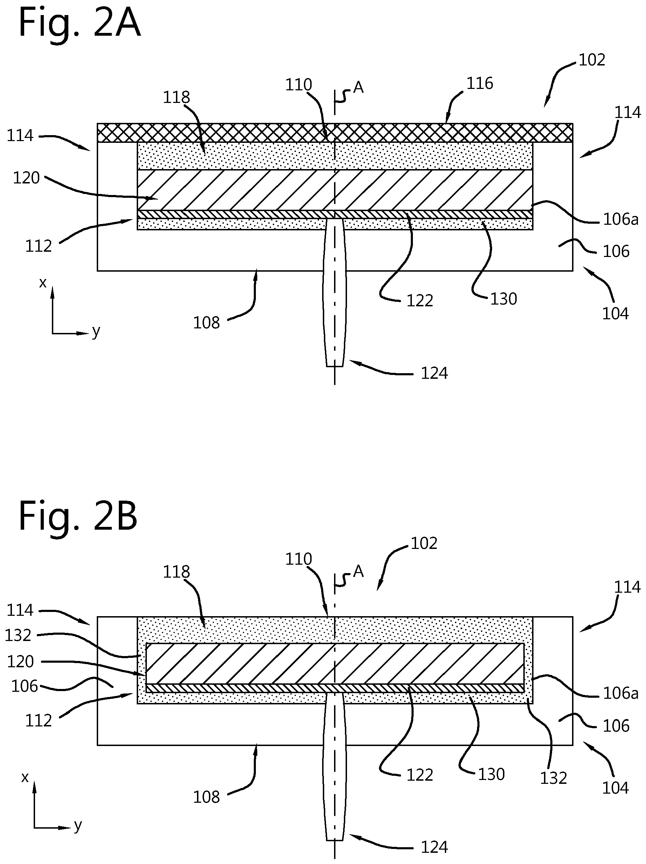

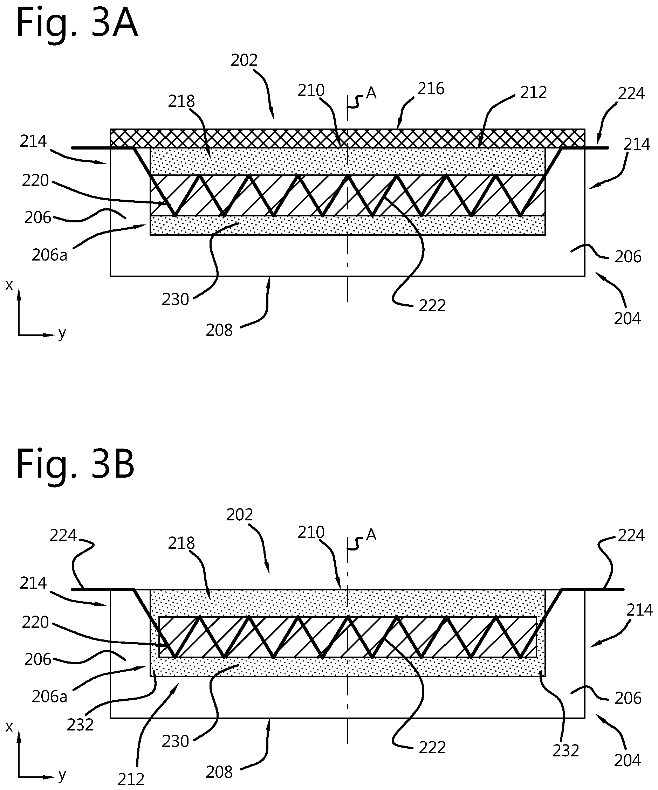

Housing space 112 when viewed in first direction x that is parallel to central axis A, subsequently comprises gel layer 118, capacitive layer 120, which in this example is manufactured from (powdered) activated carbon, current feeder 122 with connector 124 and gel layer 130. Gel layer 118 extends in second direction y, which is perpendicular to first direction x, over the entire surface area of housing space 112. As such, gel layer 118 forms a seal between end membrane 116 and capacitive layer 120 in housing space 112 (see figures 2A). Capacitive layer 120 extends directly adjacent to and in contact with gel layer 118 in second direction y over the entire surface of housing space 118 (see figure 2A) or a central part of housing space 118 (see figure 2B). In the example of figure 2B, in which capacitive layer 120 extends over at least a central part of housing space 112, a gel layer 132 is provided between the circumference of capacitive layer 120 and the internal side of housing wall 106. In this case, capacitive layer 120 is encapsulated by gel layer 118, current feeder 122 and the gel positioned next to capacitive layer 120. Current feeder 122 is in this example positioned adjacent with and directly in contact with capacitive layer 120 and, on an opposite side, with second gel layer 130. As such, current feeder 122 and capacitive layer 120 are completely encapsulated in a gel layer comprising gel layers 118, 130 as well as the layer 132 next to side wall 106. Second gel layer 130 is further in contact with bottom wall 108 of housing 104. Bottom wall 108 in this example is provided with an opening through which connector 124 extends. Connector 124 extends through gel layer 130 and is connected to, or integrally formed with, current feeder 122 and forms a connection to connect an external power source or power sink to current feeder 122. As such, a direct electrical connection exists between connector 124 and current feeder 122, as well as between current feeder 122, capacitive layer 120 and gel layer 118. In a third example, capacitive electrode 202 comprises housing 204 with housing walls 206, 208 and opening 210 that together delineate housing space 212. In this example (see figures 3A, 3B), housing 204 is a housing in which housing wall 206 is side wall 206 and housing wall 208 forms bottom wall 208. It is noted that housing 204 may have different shapes, including cylindrical, hexagonal, rectangular or square. Housing walls 206, 208 together enclose housing space 212, while opening 210 provides access to housing space 212.

Furthermore, opening 210 is delineated by end section 214 of end wall 206, which end section is configured to be adjacent to end membrane 216 of a membrane stack. In this example, end membrane 216 is a CEM-membrane. Naturally, it may also be a different type of membrane, depending on the configuration of the membrane stack to which the capacitive electrode is connected. Moreover, it may even be a flow compartment of the membrane stack.

Housing space 212, when viewed in first direction x that is parallel to central axis A, subsequently comprises gel layer 218, capacitive layer 220, which in this example is manufactured from (powdered) activated carbon and gel layer 230. Gel layer 218 extends in second direction y, which is perpendicular to first direction x, over the entire surface area of housing space 212. As such, gel layer 218 forms a seal between end membrane 216 and capacitive layer 220 in housing space 212 (see figure 3A). Capacitive layer 220 extends directly adjacent to and in contact with gel layer 218 in second direction y over the entire surface of housing space 218 (see figure 3A) or a central part of housing space 218 (see figure 3B). In the example of figure 3B, in which capacitive layer 220 extends over at least a central part of housing space 212, gel layer 232 is provided between the circumference of capacitive layer 220 and the internal side of housing wall 206. In this case, capacitive layer 220 is encapsulated by gel layers 218, 232 and 230. Current feeder 222 in this example is positioned inside capacitive layer 220 and is provided with two connectors 224 which extend from capacitive layer 220 through gel layer 218 towards and over end section 214 to outside housing 204. As such, connectors 224 in this example extends between end section 214 and the membrane stack that is positioned against it (not shown) to outside housing 204. It is noted that in this example, connectors 224 are integral part of current feeder 222.

Second gel layer 230 is further in contact with bottom wall 208 of housing 204. Bottom wall 208 in this example is a completely closed bottom 208.

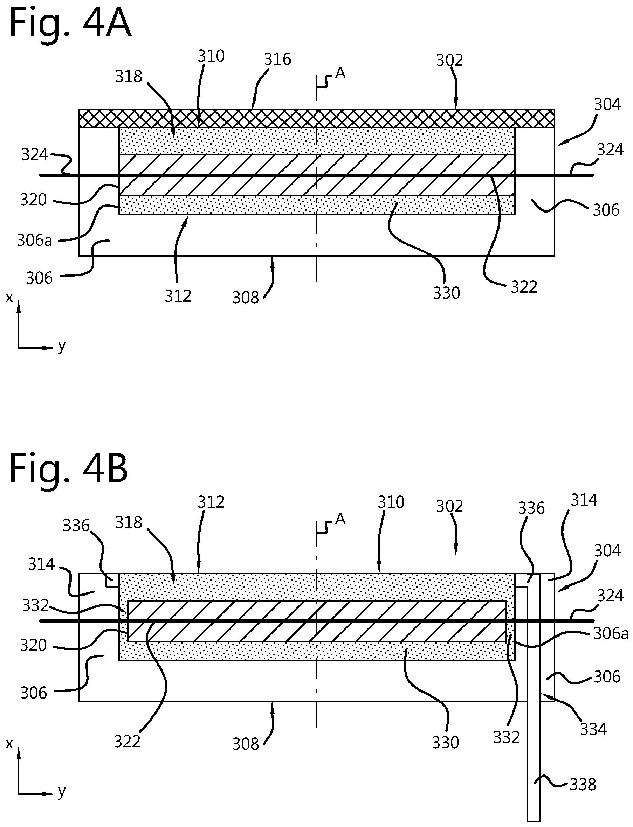

In a fourth example (see figures 4A, 4B), capacitive electrode 302 comprises housing 304 with housing walls 306, 308 and opening 310 that together delineate housing space 312. In this example (see figures 4A, 4B), housing 304 is a housing in which housing wall 306 is side wall 306 and housing wall 308 forms bottom wall 308. It is noted that housing 304 may have different shapes, including cylindrical, rectangular or square. Housing walls 306, 308 together enclose housing space 312, while opening 310 provides access to housing space 312.

Furthermore, opening 310 is delineated by end section 314 of end wall 306, which end section is configured to be adjacent to end membrane 316 of a membrane stack. In this example, end membrane 316 is a CEM-membrane. Naturally, it may also be a different type of membrane, depending on the configuration of the membrane stack to which the capacitive electrode is connected. Moreover, it may even be a flow compartment of the membrane stack.

Housing space 312, when viewed in first direction x that is parallel to central axis A, subsequently comprises gel layer 318, capacitive layer 320, which in this example is manufactured from (powdered) activated carbon and gel layer 330. Gel layer 318 extends in second direction y, which is perpendicular to first direction x, over the entire surface area of housing space 312. As such, gel layer 318 forms a seal between end membrane 316 and capacitive layer 320 in housing space 312 (see figures 4A). Capacitive layer 320 extends directly adjacent to and in contact with gel layer 318 in second direction y over the entire surface of housing space 318 (see figure 4A) or a central part of housing space 318 (see figure 4B). In the example of figure 4B, in which capacitive layer 320 extends over at least a central part of housing space 312, gel layer 332 is provided between the circumference of capacitive layer 320 and the internal side 306a of housing wall 306. In this case, capacitive layer 320 is encapsulated by gel layers 318, 332 and 330. Current feeder 322 in this example is positioned inside capacitive layer 320 and is provided with two connectors 324 which extend from capacitive layer 320 through side wall 306 and adjacent gel layer 332 to outside housing 304. Second gel layer 330 is further in contact with bottom wall 308 of housing 304. Bottom wall 308 in this example is a completely closed bottom 308.

Furthermore, the example shown in figure 4B also shows drainage channel 334, which comprises first part 336 that extends partially or completely along the circumference of housing 304 in or near end section 314 and second part 338, which forms channel 338 that extends from first part 336 through side wall 306 towards and through bottom wall 308 to outside housing 304 to remove excess water from housing 304. Channel 338 may also be positioned on an outer wall of side wall 306 rather than in side wall 306. It is noted that drainage channel 334 may also be provided in any of the other examples in a similar manner.

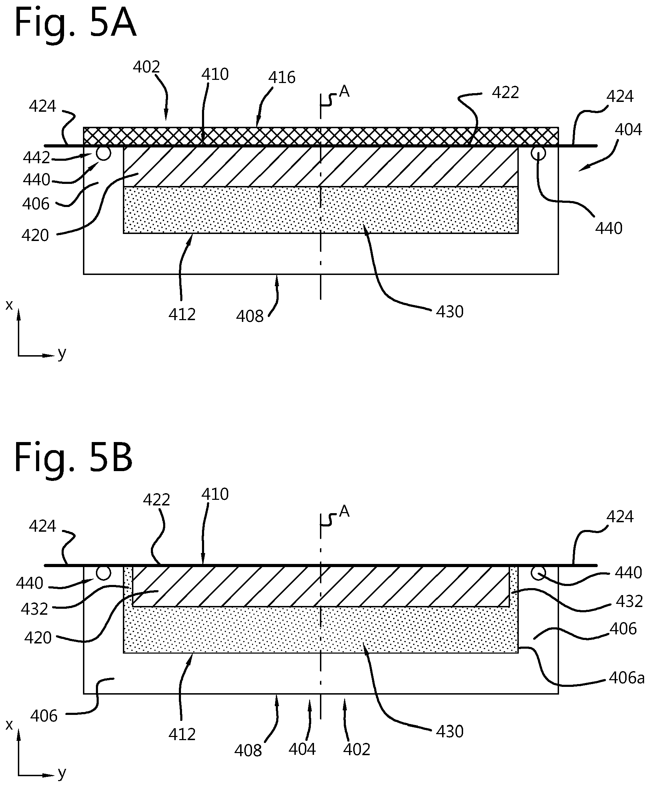

In a fifth example (see figures 5A, 5B), capacitive electrode 402 comprises housing 404 with housing walls 406, 408 and opening 410 that together delineate housing space 412. In this example (see figures 5A, 5B), housing 404 is a housing in which housing wall 406 is side wall 406 and housing wall 408 forms bottom wall 408. It is noted that housing 404 may have different shapes, including cylindrical, rectangular or square. Housing walls 406, 408 together enclose housing space 412, while opening 410 provides access to housing space 412.

Furthermore, opening 410 is delineated by end section 414 of end wall 406, which end section is configured to be adjacent to end membrane 416 of a membrane stack. In this example, end membrane 416 is a CEM-membrane. Naturally, it may also be a different type of membrane, depending on the configuration of the membrane stack to which the capacitive electrode is connected. Moreover, it may even be a flow compartment of the membrane stack.

Housing space 412, when viewed in first direction x that is parallel to central axis A, subsequently comprises current feeder 422, capacitive layer 420, which in this example is manufactured from (powdered) activated carbon, and gel layer 430. Current feeder 422 extends in second direction y, which is perpendicular to first direction x, over the entire surface area of housing space 412 or over a part thereof. Current feeder 422 in this example extends parallel to end membrane 416 and over end section 414 to outside housing 402. In this example, end section 414 is provided with conductor 440 which extends over at least a part of the circumference of housing 402. In this example, conductor 440 is copper ring 440 that extends in groove 442 in end section 414 along the entire circumference of housing 402. Part of copper ring 440 extends above the surface of end section 414 and is in direct electrical contact with current feeder 422. Capacitive layer 420 extends in second direction y directly adjacent to and in contact with current feeder 422 and, on an opposite side, with gel layer 430. In the example of figure 5B, in which capacitive layer 420 extends over at least a central part of housing space 412, gel layer 432 is provided between the circumference of capacitive layer 420 and the internal side 406a of housing wall 406. In this case, capacitive layer 420 is encapsulated by gel layers 430 and 432 as well as by current feeder 422.

In an example the method 1000 for manufacturing a capacitive electrode according to the invention comprises the steps of providing 1002 providing an electrode housing having a number of housing walls that enclose a housing space and an opening that is operatively connected to the housing space. In a subsequent step, the method comprises the step of providing 1004 a current feeder to the electrode housing, wherein the current feeder comprises a connector that extends at least partially outside the electrode housing and providing 1006 a capacitive layer to the electrode housing and applying 1008 a gel layer near or in the opening, such that the gel layer is in contact with the capacitive layer and seals the opening.

### Experimental results

An embodiment of the capacitive electrode according to the invention was tested in a lab-test using an in-house designed 10×10 cm² lab cross-flow membrane assembly operated in capacitive reverse electrodialysis (CRED) mode with 30 cells (=cell pairs; N=30).

The membrane assembly comprised ion exchange membranes (cation exchange membranes and anion exchange membranes) stacked in a membrane stack, which was provided with side-plates and two end-plates, which were positioned at opposite ends of the membrane stack. The end plates were formed by the capacitive electrodes according to the invention. The electrode compartment comprised an activated carbon layer, a gel layer and a current feeder/collector. A platinum coated titanium mesh electrode was used as current feeder. It should be noted that for economic reasons the preferred current feeder may be constructed from mainly carbon/graphite based materials.

The low concentration feed solution had a salinity of 1.0 gram/liter NaCL (conductivity of ~2.0 mS/cm at a temperature of approximately 23 °C) and the high concentration feed solution had a salinity of 32.6 gram/liter (conductivity of ~49.6 mS/cm at a temperature of approximately 26 °C). The measurements were conducted at an average temperature of approximately 25 degrees °C using a potentiostat. The feed solutions were made using NaCl and tap water.

The gel layer was made of using an agar-agar gel powder and an 3M NaCl solution. The activated carbon layer was made by performing the steps of:
- making a paste/slurry using activated carbon powder (Norit) and demi-water;
- mixing the components, and leaving the mixture to settle for a period of 15 minutes before further processing;
- depositing the paste/slurry on top of the current feeder in the electrode compartment;
- casting the mixture to the required layer thickness;
- drying the paste/slurry (using an electric blow dryer) until the activated carbon layer contained a low amount of moisture (i.e. slightly moist).

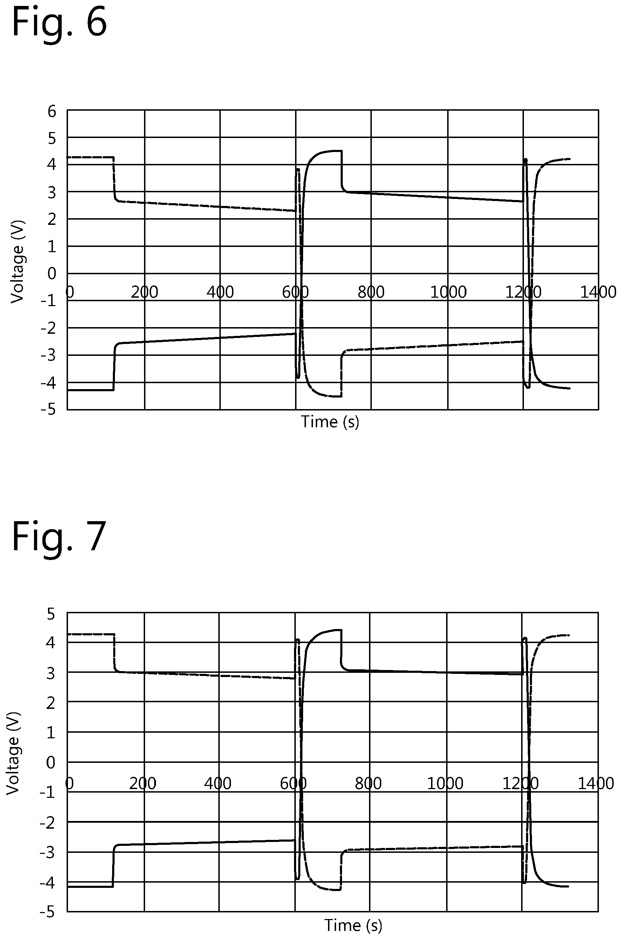

In order to prepare the slurry, activated carbon powder and water were mixed with a predetermined content ratio, which preferably is a content ratio between activated carbon powder and demi-water of 1:2 (w/w). For the first experiment, 50 grams of demi-water was added to 25 grams of activated carbon powder (see also figure 6). For the second experiment a content ratio of 1:2 (w/w) (see also figure 7), with 50 grams of AC-powder and 100 grams of water was used. The drying was performed to the amount that the top layer was dry or at most moist in order to prevent mixing with the subsequently applied gel layer. It is noted that no binder was added during any of the steps in the experiment.

The gel layer was prepared using agar-agar powder (Boom B.V.), demi-water and NaCl (ESCO food grade, 99.8% purity). The ratio between agar-agar and demi-water is 1:50 (w/w). Thus, 2 grams of agar-agar power is boiled in 100 ml of a 3M NaCl solution for 5-8 minutes during continuous stirring at 500 rpm. After removing air bubbles from the solution, the prepared gel was poured on top of the activated carbon layer and subsequently left to cool down.

The results from the experiments were captured in a CRED performance graph showing two power producing cycles with 25 g activated carbon (figure 6) and double the amount, thus 50 g of activated carbon (figure 7). The figures (see figures 6, 7) show a substantially linear trend between the thickness of the capacitive layer and the voltage drop, which is an indication of the electrode capacity. The experiments were performed with a 300 ml/minute flow rate, a current density of 20 A/m² and respectively a 32.6 gram/liter versus 1.0 gram/liter NaCl solution at about 25°C.The present invention is by no means limited to the above described preferred embodiments thereof. The rights sought are defined by the following claims, within the scope of which many modifications can be envisaged.

## Claims

1. Capacitive electrode for a membrane-based device, the electrode comprising:
- an electrode housing comprising:
∼ a number of housing walls that enclose a housing space; and
∼ an opening that is operatively connected to the housing space, and wherein the opening is configured to be positioned adjacent an end membrane of a membrane stack;
- a capacitive layer that is positioned in the housing space;
- a current feeder that is positioned in the housing space and that is in electrical contact with the capacitive layer;
- a gel layer that is positioned in contact with the capacitive layer;
wherein the gel layer is provided in or adjacent to the opening such that the gel layer seals the opening of the electrode housing, or wherein the gel layer is positioned near a bottom housing wall of the housing and the current feeder is positioned in or near the opening.

2. Capacitive electrode according to claim 1, comprising a separator layer, preferably a filter paper layer, that is positioned between the gel layer and the capacitive layer.

3. Capacitive electrode according to any one of the previous claims, wherein the gel layer is an ion-conducting layer and/or wherein the gel is chosen from a group of a hydrogel, preferably an aqua-based hydrogel, gelatin, a PVA based gel, a PMMA based gel or agar-agar.

4. Capacitive electrode according to any one of the preceding claims, wherein the housing is end-plate of a membrane-based device, such as an electrodialysis device, a reverse electrodialysis device or a fuel cell.

5. Capacitive electrode according to any one of the previous claims, wherein the capacitive layer is an activated carbon layer; and/or
wherein the current feeder is chosen from a (perforated) carbon foil, a (perforated) carbon plate, a (perforated) graphite foil, a (perforated) graphite plate, a platinum coated titanium mesh, or a platinum coated titanium (perforated) plate; and/or
wherein the gel layer comprises a reinforcement layer, wherein the reinforcement layer preferably comprises a netting or a non-woven.

6. Capacitive electrode according to any one of the previous claims, wherein the housing comprises a lining or rim that extends around the opening and that is in electrical contact with the current feeder, wherein the lining or rim preferably is copper or graphite.

7. Capacitive electrode according to any one of the previous claims, wherein the electrode additionally comprises a second capacitive layer and a second gel layer, such that, when viewed from the opening towards the housing space, the electrode comprises the gel layer, the capacitive layer, the current feeder, the second capacitive layer and the second gel layer.

8. Capacitive electrode according to any one of the claims 1-6, wherein the electrode comprises a second gel layer, wherein, when viewed from the opening towards the housing space and the bottom housing wall, the electrode comprises the gel layer, the capacitive layer, the current feeder and the second gel layer.

9. Capacitive electrode according to any one of the previous claims, wherein the housing comprises at least one side wall, and wherein a gel layer is provided in the housing space adjacent the at least one side wall.

10. Capacitive electrode according to any one of the previous claims, wherein the current feeder is integrated in the capacitive layer, wherein the current feeder preferably extends in direction substantially parallel to the opening in the capacitive layer.

11. Capacitive electrode according to any one of the previous claims, wherein the gel comprises a salt composition, such as NaCl, wherein the composition is preferably a solution in the range of 0.1M < salt < 6M.

12. Membrane-based device for performing a membrane-based process, such as electrodialysis and/or reverse electrodialysis, the device comprising:
- at least one electrode according to any one of the preceding claims;
- a number membranes that are stacked to form a stack of membranes,
wherein the at least one electrode is positioned adjacent to an end membrane of the membrane stack such that the opening and/or gel layer of the electrode are in contact with the end membrane.

13. Method for manufacturing a capacitive electrode for a membrane-based process, the method comprising the steps of:
- providing an electrode housing comprising:
- a number of housing walls that enclose a housing space; and
- an opening that is operatively connected to the housing space, and wherein the opening is configured to be positioned adjacent an end membrane of a membrane stack;
- providing a current feeder to the electrode housing, wherein the current feeder comprises a connector that extends at least partially outside the electrode housing;
- providing a capacitive layer to the electrode housing;
- applying a gel layer, such that the gel layer is in contact with the capacitive layer,
wherein the gel layer is applied near or in the opening and seals the opening of the electrode housing, or wherein the gel layer is applied near a bottom end of the housing which is opposite the opening.

14. Method according to claim 13, wherein the step of providing a capacitive layer to the electrode housing comprises:
- providing a slurry of water and activated carbon;
- applying the slurry on the current feeder such that the slurry and the current feeder are in electrical contact with each other;
- drying the slurry to form a flexible, moist capacitive layer.

15. Method according to claim 13 or 14, wherein the step of applying the gel layer comprises applying a liquid gel on top of the capacitive layer, and wherein the step of applying the gel layer optionally also comprises applying a filter paper layer between the gel and the capacitive layer.

## Patentansprüche

1. Kapazitive Elektrode für eine membranbasierte Vorrichtung, die Elektrode umfassend:
- ein Elektrodengehäuse, umfassend:
∼ eine Anzahl von Gehäusewänden, die einen Gehäuseraum umschließen; und
eine Öffnung, die mit dem Gehäuseraum wirkverbunden ist, und wobei die Öffnung dazu konfiguriert ist, angrenzend an eine Endmembran eines Membranstapels positioniert zu werden;
- eine kapazitive Schicht, die in dem Gehäuseraum positioniert ist;
- eine Stromzuführung, die in dem Gehäuseraum positioniert ist und die mit der kapazitiven Schicht in elektrischem Kontakt steht;
- eine Gelschicht, die in Kontakt mit der kapazitiven Schicht positioniert ist;
wobei die Gelschicht in der oder angrenzend an die Öffnung bereitgestellt wird, sodass die Gelschicht die Öffnung des Elektrodengehäuses abdichtet, oder wobei die Gelschicht nahe einer unteren Gehäusewand des Gehäuses positioniert ist und die Stromzuführung in oder nahe der Öffnung positioniert ist.

2. Kapazitive Elektrode nach Anspruch 1, umfassend eine Separatorschicht, vorzugsweise eine Filterpapierschicht, die zwischen der Gelschicht und der kapazitiven Schicht positioniert ist.

3. Kapazitive Elektrode nach einem der vorstehenden Ansprüche, wobei die Gelschicht eine ionenleitende Schicht ist und/oder wobei das Gel aus einer Gruppe aus einem Hydrogel, vorzugsweise einem wasserbasierten Hydrogel, Gelatine, einem PVA-basierten Gel, einem PMMA-basierten Gel oder Agar-Agar ausgewählt ist.

4. Kapazitive Elektrode nach einem der vorstehenden Ansprüche, wobei das Gehäuse eine Endplatte einer membranbasierten Vorrichtung, wie eine Elektrodialysevorrichtung, eine Umkehrelektrodialysevorrichtung oder eine Brennstoffzelle, ist.

5. Kapazitive Elektrode nach einem der vorstehenden Ansprüche, wobei die kapazitive Schicht eine Aktivkohleschicht ist; und/oder
wobei die Stromzuführung aus einer (perforierten) Kohlenstofffolie, einer (perforierten) Kohlenstoffplatte, einer (perforierten) Graphitfolie, einer (perforierten) Graphitplatte, einem platinbeschichteten Titangewebe oder einer (perforierten) platinbeschichteten Titanplatte ausgewählt ist; und/oder
wobei die Gelschicht eine Verstärkungsschicht umfasst, wobei die Verstärkungsschicht vorzugsweise ein Netz oder ein Vlies umfasst.

6. Kapazitive Elektrode nach einem der vorstehenden Ansprüche, wobei das Gehäuse eine Auskleidung oder einen Rand umfasst, die/der sich um die Öffnung herum erstreckt und mit der Stromzuführung in elektrischem Kontakt steht, wobei die Auskleidung oder der Rand vorzugsweise Kupfer oder Graphit ist.

7. Kapazitive Elektrode nach einem der vorstehenden Ansprüche, wobei die Elektrode zusätzlich eine zweite kapazitive Schicht und eine zweite Gelschicht umfasst, sodass die Elektrode bei Betrachtung von der Öffnung zu dem Gehäuseraum hin die Gelschicht, die kapazitive Schicht, die Stromzuführung, die zweite kapazitive Schicht und die zweite Gelschicht umfasst.

8. Kapazitive Elektrode nach einem der Ansprüche 1 bis 6, wobei die Elektrode eine zweite Gelschicht umfasst, wobei die Elektrode bei Betrachtung von der Öffnung zu dem Gehäuseraum und der unteren Gehäusewand hin die Gelschicht, die kapazitive Schicht, die Stromzuführung und die zweite Gelschicht umfasst.

9. Kapazitive Elektrode nach einem der vorstehenden Ansprüche, wobei das Gehäuse mindestens eine Seitenwand umfasst und wobei in dem Gehäuseraum angrenzend an die mindestens eine Seitenwand eine Gelschicht bereitgestellt ist.

10. Kapazitive Elektrode nach einem der vorstehenden Ansprüche, wobei die Stromzuführung in die kapazitive Schicht integriert ist, wobei sich die Stromzuführung vorzugsweise im Wesentlichen parallel zu der Öffnung in der kapazitiven Schicht erstreckt.

11. Kapazitive Elektrode nach einem der vorstehenden Ansprüche, wobei das Gel eine Salzzusammensetzung, wie NaCl, umfasst, wobei die Zusammensetzung vorzugsweise eine Lösung in dem Bereich von 0,1 M < Salz < 6 M ist.

12. Membranbasierte Vorrichtung zum Durchführen eines membranbasierten Prozesses, wie Elektrodialyse und/oder Umkehrelektrodialyse, die Vorrichtung umfassend:
- mindestens eine Elektrode nach einem der vorstehenden Ansprüche;
- eine Anzahl Membranen, die gestapelt sind, um einen Stapel von Membranen zu bilden,
wobei die mindestens eine Elektrode angrenzend an eine Endmembran des Membranstapels positioniert ist, sodass die Öffnung und/oder Gelschicht der Elektrode mit der Endmembran in Kontakt ist.

13. Verfahren zum Herstellen einer kapazitiven Elektrode für einen membranbasierten Prozess, das Verfahren umfassend die Schritte:
- Bereitstellen eines Elektrodengehäuses, umfassend:
∼ eine Anzahl von Gehäusewänden, die einen Gehäuseraum umschließen; und
eine Öffnung, die mit dem Gehäuseraum wirkverbunden ist, und wobei die Öffnung dazu konfiguriert ist, angrenzend an eine Endmembran eines Membranstapels positioniert zu werden;
- Bereitstellen einer Stromzuführung zu dem Elektrodengehäuse, wobei die Stromzuführung einen Verbinder umfasst, der sich mindestens teilweise außerhalb des Elektrodengehäuses erstreckt;
- Bereitstellen einer kapazitiven Schicht an dem Elektrodengehäuse;
- Aufbringen einer Gelschicht, sodass die Gelschicht in Kontakt mit der kapazitiven Schicht ist,
wobei die Gelschicht nahe oder in der Öffnung aufgebracht wird und die Öffnung des Elektrodengehäuses abdichtet, oder wobei die Gelschicht nahe eines unteren Endes des Gehäuses aufgebracht wird, das der Öffnung gegenüberliegt.

14. Verfahren nach Anspruch 13, wobei der Schritt des Bereitstellens einer kapazitiven Schicht an dem Elektrodengehäuse umfasst:
- Bereitstellen einer Aufschlämmung von Wasser und Aktivkohle;
- Aufbringen der Aufschlämmung auf die Stromzuführung, sodass die Aufschlämmung und die Stromzuführung in elektrischem Kontakt miteinander stehen;
- Trocknen der Aufschlämmung, um eine flexible, feuchte kapazitive Schicht zu bilden.

15. Verfahren nach Anspruch 13 oder 14, wobei der Schritt des Aufbringens der Gelschicht das Aufbringen eines flüssigen Gels auf die kapazitive Schicht umfasst, und wobei der Schritt des Aufbringens der Gelschicht optional auch das Aufbringen einer Filterpapierschicht zwischen dem Gel und der kapazitiven Schicht umfasst.

## Revendications

1. Électrode capacitive destinée à un dispositif à base de membrane, l'électrode comprenant :
- un boîtier d'électrode comprenant :
∼ un nombre de parois de boîtier qui entourent un espace de boîtier ; et
une ouverture qui est reliée de manière fonctionnelle à l'espace de boîtier, et dans laquelle l'ouverture est conçue pour être positionnée à proximité d'une membrane d'extrémité d'un empilement de membranes ;
- une couche capacitive qui est positionnée dans l'espace de boîtier ;
- un dispositif d'alimentation en courant qui est positionné dans l'espace de boîtier et qui est en contact électrique avec la couche capacitive ;
- une couche de gel qui est positionnée en contact avec la couche capacitive ;
dans laquelle la couche de gel est fournie dans l'ouverture ou à proximité de celle-ci de telle sorte que la couche de gel scelle l'ouverture du boîtier d'électrode, ou dans lequel la couche de gel est positionnée près d'une paroi de boîtier inférieure du boîtier et le dispositif d'alimentation en courant est positionné dans l'ouverture ou près de celle-ci.

2. Électrode capacitive selon la revendication 1, comprenant une couche de séparation, de préférence une couche de papier filtre, qui est positionnée entre la couche de gel et la couche capacitive.

3. Électrode capacitive selon l'une quelconque des revendications précédentes, dans laquelle la couche de gel est une couche conductrice d'ions et/ou dans laquelle le gel est choisi parmi un groupe d'un hydrogel, de préférence un hydrogel à base d'aigue-marine, de la gélatine, un gel à base de PVA, un gel à base de PMMA ou un agar-agar.

4. Électrode capacitive selon l'une quelconque des revendications précédentes, dans laquelle le boîtier est une plaque d'extrémité d'un dispositif à base de membrane, tel qu'un dispositif d'électrodialyse, un dispositif d'électrodialyse inverse ou une pile à combustible.

5. Électrode capacitive selon l'une quelconque des revendications précédentes, dans laquelle la couche capacitive est une couche de charbon actif ; et/ou
dans laquelle le dispositif d'alimentation en courant est choisi parmi une feuille de carbone (perforée), une plaque de carbone (perforée), une feuille de graphite (perforée), une plaque de graphite (perforée), une maille de titane revêtue de platine ou une plaque (perforée) de titane revêtue de platine ; et/ou
dans laquelle la couche de gel comprend une couche de renforcement, dans laquelle la couche de renforcement comprend de préférence un filet ou un non tissé.

6. Électrode capacitive selon l'une quelconque des revendications précédentes, dans laquelle le boîtier comprend un revêtement ou un bord qui s'étend autour de l'ouverture et qui est en contact électrique avec le dispositif d'alimentation en courant, dans lequel le revêtement ou le bord est de préférence du cuivre ou du graphite.

7. Électrode capacitive selon l'une quelconque des revendications précédentes, dans laquelle l'électrode comprend en outre une seconde couche capacitive et une seconde couche de gel, de sorte que, lorsqu'elle est observée depuis l'ouverture vers l'espace de boîtier, l'électrode comprend la couche de gel, la couche capacitive, le dispositif d'alimentation en courant, la seconde couche capacitive et la seconde couche de gel.

8. Électrode capacitive selon l'une quelconque des revendications 1 à 6, dans laquelle l'électrode comprend une seconde couche de gel, dans laquelle, lorsqu'elle est vue depuis l'ouverture vers l'espace de boîtier et la paroi de boîtier inférieure, l'électrode comprend la couche de gel, la couche capacitive, le dispositif d'alimentation en courant et la seconde couche de gel.

9. Électrode capacitive selon l'une quelconque des revendications précédentes, dans laquelle le boîtier comprend au moins une paroi latérale, et dans laquelle une couche de gel est prévue dans l'espace de boîtier à proximité de l'au moins une paroi latérale.

10. Électrode capacitive selon l'une quelconque des revendications précédentes, dans laquelle le dispositif d'alimentation en courant est intégré dans la couche capacitive, dans laquelle le dispositif d'alimentation en courant s'étend de préférence dans une direction sensiblement parallèle à l'ouverture dans la couche capacitive.

11. Électrode capacitive selon l'une quelconque des revendications précédentes, dans laquelle le gel comprend une composition de sel, telle que NaCl, dans laquelle la composition est de préférence une solution dans la plage de 0,1M < sel < 6M.

12. Dispositif à base de membrane destiné à réaliser un procédé à base de membrane, tel qu'une électrodialyse et/ou une électrodialyse inverse, le dispositif comprenant :
- au moins une électrode selon l'une quelconque des revendications précédentes ;
- un nombre de membranes qui sont empilées pour former un empilement de membranes,
dans lequel l'au moins une électrode est positionnée à proximité d'une membrane d'extrémité de l'empilement de membranes de telle sorte que la couche d'ouverture et/ou de gel de l'électrode sont en contact avec la membrane d'extrémité.

13. Procédé de fabrication d'une électrode capacitive destinée à un procédé à base de membrane, le procédé comprenant les étapes consistant à :
- fournir un boîtier d'électrode comprenant :
∼ un nombre de parois de boîtier qui entourent un espace de boîtier ; et
une ouverture qui est reliée de manière fonctionnelle à l'espace de boîtier, et dans lequel l'ouverture est conçue pour être positionnée à proximité d'une membrane d'extrémité d'un empilement de membranes ;
- fournir un dispositif d'alimentation en courant au boîtier d'électrode, dans lequel le dispositif d'alimentation en courant comprend un connecteur qui s'étend au moins partiellement à l'extérieur du boîtier d'électrode ;
- fournir une couche capacitive au boîtier d'électrode ;
- appliquer une couche de gel, de telle sorte que la couche de gel est en contact avec la couche capacitive, dans lequel la couche de gel est appliquée près de l'ouverture ou dans celle-ci et scelle l'ouverture du boîtier d'électrode, ou dans lequel la couche de gel est appliquée près d'une extrémité inférieure du boîtier qui est opposée à l'ouverture.

14. Procédé selon la revendication 13, dans lequel l'étape de fourniture d'une couche capacitive au boîtier d'électrode comprend :
- la fourniture d'une bouillie d'eau et de charbon actif ;
- l'application de la bouillie sur le dispositif d'alimentation en courant de telle sorte que la bouillie et le dispositif d'alimentation en courant sont en contact électrique l'un avec l'autre ;
- le séchage de la bouillie pour former une couche capacitive humide souple.

15. Procédé selon la revendication 13 ou 14, dans lequel l'étape d'application de la couche de gel comprend l'application d'un gel liquide sur la couche capacitive, et dans lequel l'étape d'application de la couche de gel comprend également éventuellement l'application d'une couche de papier filtre entre le gel et la couche capacitive.
